# FASCICULE DE BREVET EUROPEEN

(11) **EP 2 282 475 B1**
(45) Date de publication et mention de la délivrance du brevet: **07.02.2018**
(21) Numéro de dépôt: 10171282.6
(22) Date de dépôt: 29.07.2010
(51) Int. Cl.: H04L 29/06, H04L 12/28

(54) **PROCÉDÉ ET DISPOSITIF DE RESTITUTION D'UN CONTENU MULTIMÉDIA**
VERFAHREN UND VORRICHTUNG ZUR WIEDERHERSTELLEN VON MULTIMEDIA DATEN
METHOD AND DEVICE FOR RESTORING MULTIMEDIA CONTENT

(30) Priorité: 04.08.2009 FR 0955491
(43) Date de publication de la demande: 09.02.2011
(73) Titulaire: Orange, 75015 Paris (FR)
(72) Inventeur: Bendiabdallah, Halim, 92430 Marnes-La-Coquette (FR); Agro, Roberto, 92120 Montrouge (FR)
(74) Mandataire: Cabinet Plasseraud

(56) Documents cités:
- EP-A1- 1 845 683
- WO-A2-02/093866
- US-A1- 2007 101 024

## Description

Le domaine technologique de cette invention concerne la diffusion des contenus multimédia numériques dans les réseaux domestiques.

L'invention se rapporte à un procédé, un dispositif et un système de restitution d'un contenu multimédia par un équipement de restitution.

En particulier, l'invention est applicable à la restitution par un équipement de restitution de contenus multimédia déclenchée au moyen d'une requête définie selon le protocole UPnP (de l'anglais « *Universal Plug'n Play* »).

Une architecture UPnP de gestion de contenus multimédia, c'est-à-dire de contenus audios, vidéos et/ou photos, comprend généralement :
- un ou plusieurs serveurs de contenus multimédia, également appelés DMS (de l'anglais « *Digital Media Server* ») ; un tel serveur est une entité esclave stockant des contenus multimédia ;
- un ou plusieurs modules de commande UPnP, également appelé DMC (de l'anglais « *Digital Media Controler* ») ; un tel module de commande DMC est une entité maître du réseau qui est apte à détecter les modules UPnP présents dans un réseau, et déterminer quels sont les services qu'ils proposent, recevoir des événements de ces modules et les commander en leur envoyant des commandes généralement appelées "actions" dans le standard UPnP ;
- un ou plusieurs modules de restitution UPnP, généralement appelés DMR (de l'anglais «*Digital Media Renderer*») ; chaque module de restitution DMR est une entité esclave en charge de la restitution (par exemple par affichage) d'un contenu multimédia.

Un module de commande DMC permet à un utilisateur de sélectionner un contenu multimédia mis à disposition par un serveur de contenus DMS et de le diffuser sur le module de restitution DMR de son choix.

Un procédé de diffusion d'un contenu multimédia à partir d'une requête de restitution codée selon le protocole UPnP sur un module de restitution DMR comporte généralement les étapes suivantes :
- le module de commande DMC obtient l'adresse du contenu multimédia sous la forme d'un identifiant URI (en français « *Identifiant Uniforme de Ressource* », de l'anglais « *Uniform Resource Identifier* ») auprès du serveur de contenus DMS ;
- le module de commande DMC spécifie au module de restitution DMR l'URI du contenu multimédia à diffuser en utilisant une requête d'initialisation d'accès à un contenu, généralement appelée action « *Set AV Transport URI* » ;
- le module de commande DMC déclenche la restitution du contenu multimédia sur le module de restitution DMR en envoyant une requête d'exécution, généralement appelée action « *Play »* ;
- le module de restitution DMR transmet alors au serveur de contenus DMS une requête pour l'obtention du contenu multimédia selon un protocole HTTP. Le serveur de contenus DMS lui transmet le contenu multimédia codé selon ce même protocole.

Le document EP 1 845 683 décrit une méthode de restitution d'un contenu multimédia stocké dans un serveur de contenus multimédia UPnP. La restitution est réalisée par un dispositif de restitution utilisant le protocole UPnP, à partir d'une requête émise par un point de contrôle UPnP.

Le document US 2007/101024 un réseau combine UPnP - IEEE 1394 comprenant un équipement de restitution UPnP, un équipement de control apte a contrôler l'équipement de de restitution, des serveurs de contenus multimédia et un proxy propre a convertir de l'information selon le protocole IEEE 1394 en information selon le protocole UPnP et inversement de manière que l'équipement de restitution puisse visualiser les contenus stockes dans les serveurs de contenus.

Toutefois, une grande partie des équipements de restitution actuellement utilisés par les utilisateurs ne comportent pas de module de restitution conforme au standard UPnP. De tels équipements ne supportent donc pas le protocole UPnP et ne sont pas en mesure de recevoir ou traiter des requêtes conformes à un tel protocole. Les services de distribution de contenus multimédia à travers les réseaux locaux se font grâce à des logiciels dont les technologies sont propriétaires. Ainsi, il n'est pas possible de commander la restitution par un tel équipement de restitution d'un contenu multimédia en utilisant une requête conforme à un tel standard.

L'utilisation du standard UPnP impose l'installation d'un module de restitution UPnP sur chaque équipement de restitution existant dans le réseau domestique de l'utilisateur. Ce n'est pas toujours possible facilement ou prévu. En outre, cela représenterait en outre un coût pour l'industriel et pour le consommateur.

Pour palier certains au moins de ces inconvénients, l'invention propose un procédé de restitution d'un contenu multimédia, par au moins un équipement de restitution, d'un contenu multimédia stocké par un serveur de contenus multimédia, ladite restitution étant déclenchée au moyen d'une requête de restitution, émise par un module de commande d'équipements de restitution, codée selon un protocole non supporté par ledit au moins un équipement de restitution, le procédé comprenant les étapes suivantes :
- réceptionner ladite requête de restitution par un module supportant ledit protocole, et
- sur réception de ladite requête de restitution, piloter à partir dudit module la transmission audit au moins un équipement de restitution dudit contenu multimédia encodé sous une forme adaptée pour une restitution dudit contenu multimédia par ledit au moins un équipement de restitution.

L'équipement de restitution peut ainsi être piloté par l'intermédiaire dudit module, apte à réceptionner et traiter des requêtes de restitution que cet équipement de restitution n'est pas en mesure de traiter ni même de recevoir lui-même. Une interface de pilotage de l'équipement de restitution, via laquelle sont réceptionnées des requêtes de restitution, est ainsi déportée sur ce module, mis en oeuvre dans un équipement distinct de cet équipement de restitution. On ajoute de cette manière une nouvelle interface de pilotage à l'équipement de restitution afin de palier à son absence de compatibilité avec le protocole utilisé pour coder la requête de restitution, c'est-à-dire à l'absence dans cet équipement de restitution de tout module apte à recevoir et traiter une requête de restitution codée selon ce protocole.

Il n'est ainsi pas nécessaire de modifier l'équipement de restitution mais seulement de prévoir un module séparé, associé à cet équipement, qui soit capable de piloter cet équipement de restitution, par exemple au moyen d'un autre protocole, supporté lui par cet équipement. Ce module peut être réalisé par logiciel, être téléchargé et intégré facilement dans tout équipement du réseau dans lequel se trouve l'équipement de restitution à piloter.

Suivant des modes particuliers de réalisation, le procédé comporte l'une ou plusieurs des caractéristiques suivantes :
- le procédé de restitution comporte les étapes suivantes :
   - vérifier que le contenu multimédia stocké dans le serveur de contenus est dans un format de codage accepté par l'un parmi l'équipement de restitution ; et, dans la négative,
   - vérifier si un serveur de transcodage est apte à convertir le contenu multimédia stocké dans le serveur de contenus dans un format de codage accepté par l'équipement de restitution ;
- le procédé de restitution comporte en outre les étapes suivantes :
   - obtenir des paramètres de connexion de l'équipement de restitution ; et
   - transmettre lesdits paramètres de connexion à un serveur de transmission, l'étape de transmission du contenu multimédia étant réalisée par l'intermédiaire du serveur de transmission ;
- le procédé de restitution comporte en outre les étapes suivantes :
   - vérifier si le format de codage du contenu multimédia obtenu appartient à une liste de formats de codage acceptés par l'équipement de restitution ; et
   - transcoder le contenu multimédia obtenu en un contenu multimédia encodé sous une forme adaptée pour une restitution dudit contenu multimédia par ledit au moins un équipement de restitution, lorsque ledit format de codage du contenu multimédia réceptionné n'est pas dans ladite liste de formats de codage ;
- le procédé de restitution comporte de plus les étapes suivantes :
   - transmettre une requête de construction d'une représentation graphique à un générateur d'éléments graphiques ;
   - construire ladite représentation graphique, par le générateur d'éléments graphiques ;
   - transmettre ladite représentation graphique à l'équipement de restitution ;
- le procédé de restitution comporte en outre les étapes suivantes :
   - transmettre une notification de mise à disposition d'une représentation graphique à l'équipement de restitution ; et
   - sur réception d'une requête émise par l'équipement de restitution, transmettre ladite représentation graphique à l'équipement de restitution ;
- le procédé de restitution comporte en outre les étapes suivantes :
   - convertir ladite représentation graphique construite en au moins une image ;
   - mixer ladite au moins image aux images du contenu multimédia ;
   et, dans lequel procédé le contenu multimédia transmis à l'équipement de restitution comprend les images mixées ;
- le protocole supporté par le module est un protocole UPnP, ledit module mettant en oeuvre des fonctions d'un module de restitution UPnP ; ledit module est notamment apte à informer le dispositif de commande précité sur un service de restitution susceptible d'être fourni par ledit au moins un équipement de restitution via ledit module.

L'invention a également pour objet un programme d'ordinateur stocké sur un support d'informations, ledit programme comprenant des instructions permettant la mise en oeuvre du procédé de restitution décrit ci-dessus, lorsque ce programme est exécuté par un système informatique.

L'invention a également pour objet un module, associé à au moins un équipement de restitution, comprenant :
- des moyens pour réceptionner une requête de restitution, émise par un module de commande d'équipements de restitution, destinée à déclencher la restitution d'un contenu multimédia stocké par un serveur de contenu multimédia, ladite requête étant codée selon un protocole supporté par ledit module mais non supporté par ledit au moins un équipement de restitution;
- des moyens pour, sur réception de ladite requête de restitution, piloter l'envoi du contenu multimédia audit au moins un équipement de restitution sous une forme adaptée pour une restitution dudit contenu multimédia par ledit au moins un équipement de restitution.

Enfin, l'invention a pour objet un dispositif de restitution, par au moins un équipement de restitution, d'un contenu multimédia stocké par un serveur de contenu multimédia, ladite restitution étant déclenchée au moyen d'une requête de restitution codée selon un protocole non supporté par ledit au moins un équipement de restitution, le dispositif comprenant :
- un module apte à réceptionner ladite requête de restitution, le module supportant ledit protocole ;
- sur réception de ladite requête de restitution, le module étant apte à piloter l'envoi du contenu multimédia audit au moins un équipement de restitution sous une forme adaptée pour une restitution dudit contenu multimédia par ledit au moins un équipement de restitution.

Suivant un mode particulier de réalisation, le dispositif peut comporter la caractéristique suivante :
- ledit module est apte à piloter un envoi audit équipement de restitution d'une représentation graphique comportant des informations relatives à la restitution.

Selon une implémentation, l'invention est mise en oeuvre au moyen de composants logiciels et/ou matériels. Dans cette optique, le terme module peut correspondre dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

L'invention sera mieux comprise à la lecture de la description qui va suivre, donnée uniquement à titre d'exemple et faite en se référant aux dessins, sur lesquels :
- la figure 1 est une représentation schématique d'un système de restitution selon un premier mode de réalisation de l'invention ;
- la figure 2 est un diagramme des étapes de transmission d'une requête d'initialisation d'accès à un contenu multimédia selon le procédé de restitution de l'invention ;
- la figure 3 est un diagramme des étapes de transmission d'une requête d'exécution selon un premier mode de réalisation du procédé de restitution de l'invention ;
- la figure 4 est un schéma du système de restitution selon un second mode de réalisation de l'invention ; et
- la figure 5 est un diagramme des étapes de transmission d'une partie de la requête d'exécution selon le second mode de réalisation du procédé de restitution de l'invention.

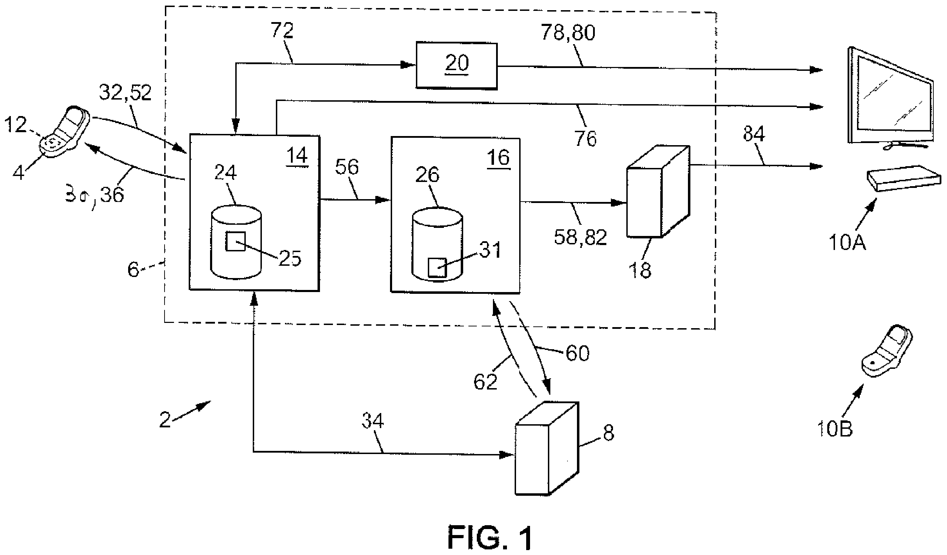

En référence à la figure 1, le système de restitution 2 comporte un équipement de commande 4 propre à envoyer des requêtes de gestion de contenus multimédia, un dispositif de transmission 6 propre à réceptionner lesdites requêtes, un serveur de contenus multimédia 8, et au moins un équipement de restitution 10A, 10B.

L'équipement de commande 4 est par exemple un téléphone sans fil ou avec fil, un ordinateur, un assistant numérique personnel, généralement appelé PDA, etc. Il comporte un module de commande DMC 12 (en anglais « *Digital Media Controler* »), conforme au standard UPnP.

L'architecture UPnP permet une mise en réseau poste-à-poste d'ordinateurs personnels, d'appareils réseaux et de périphériques sans fil. C'est une architecture ouverte, distribuée, l'envoi des requêtes UPnP étant transportées en utilisant les protocoles TCP/IP (de l'anglais « *Transmission Control Protocol*/*Internet Protocol* »), UDP (de l'anglais *« User Datagram Protocol* ») et HTTP (de l'anglais « *Hypertext Transfer Protocol* »).

Le protocole UPnP permet la communication entre deux modules UPnP quelconques sur un réseau local. Les spécifications relatives à l'architecture et au protocole UPnP peuvent être trouvées sur le site Internet www.upnp.org.

Le protocole UPnP n'est qu'un exemple de protocole pouvant être utilisé par l'équipement de commande. En variante, d'autres protocoles peuvent être utilisés pour le pilotage d'équipements de restitution.

Le contenu multimédia est, par exemple, une ou plusieurs photos, des vidéos, des fichiers audio, une combinaison de textes, sons et images, etc.

Le serveur de contenus 8 comprend des contenus multimédia à transmettre en vue de leur restitution.

Il est propre à recevoir des requêtes d'obtention d'un contenu multimédia et à transmettre des contenus multimédia.

Les équipements de restitution 10A et 10B sont, par exemple, un téléviseur, un boîtier adaptateur (de l'anglais « *Set Top Box* »), un dispositif d'affichage de photos, une chaîne Hi-fi, etc. Ils ne comportent pas de module de restitution DMR conforme au standard UPnP et ne supportent donc pas le protocole UPnP. Ils appartiennent toutefois à un réseau local. Ils supportent, par exemple, le protocole IP (de l'anglais « *Internet Protocol* ») et le protocole HTTP utilisable comme protocole de commande pour l'envoi de commande à ces équipements, ainsi que RTP ou RTSP (Real Time Streaming Protocol), en tant que protocole de diffusion de données en temps réel.

Le dispositif de transmission 6 comporte au moins une mémoire 24, 26 pour le stockage de données.

Le dispositif de transmission 6 comporte en outre un module 14, présentant une interface de commande identique à celle d'un module de restitution DMR conforme à UPnP : il est de ce fait apte à communiquer avec le module de commande DMC, à recevoir et à traiter les requêtes UPnP que ce module de commande lui transmet.

Le module 14 est le représentant (mandataire ou "proxy") d'un ou plusieurs équipements de restitution (10A et/ou 10B) qui lui sont associés et pour le compte desquels il met en oeuvre les fonctions d'un module de restitution DMR conformément au standard UPnP. Dans ce but, le module 14 coopère avec différentes entités: un serveur de transcodage 16, un serveur de transmission 18, un générateur 20 d'éléments graphiques. Le module 14, présent dans le dispositif 6, et donc mis en oeuvre dans un équipement physiquement distinct des équipements de restitution 10A et 10B qui lui sont associés, vient palier à l'absence dans ces équipements de module de restitution DMR conforme au standard UPnP.

Le module 14 pilote chacune de ces entités pour que celles-ci transmettent aux équipements de restitution 10A, 10B associés les contenus multimédia et commandes nécessaires à la restitution sur ces équipements de ces contenus multimédia. Le module 14 est en outre apte à envoyer directement, c'est-à-dire sans intervention de l'une de ces entités, une commande aux équipements de restitution 10A, 10B qui lui sont associés.

Le module 14 est qualifié de proxy en ce qu'il met en oeuvre - grâce aux entités avec lesquelles il coopère - pour le compte des équipements de restitution 10A, 10B qui lui sont associés, les fonctions d'un module de restitution DMR conformément au standard UPnP. Le module 14 met en oeuvre une interface de communication, conforme à UPnP, et des fonctions de traitement, conformes à UPnP, l'ensemble constitué par cette interface et ces fonctions étant défini en tant que service de restitution, nommé "AVTransport" dans le standard UPnP.

Les équipements de restitution 10A, 10B ne sont pas conçus pour mettre en oeuvre ces fonctions et/ou la mise en oeuvre de telles fonctions n'est pas possible ou pas compatible avec ces équipements. Le module 14 est qualifié de proxy également en ce qu'il joue le rôle d'intermédiaire entre le monde UPnP (c'est-à-dire les équipements dotés de modules UPnP) et le monde non UPnP (c'est-à-dire les équipements qui ne sont pas dotés de modules UPnP).

Le module 14 sera nommé dans la suite "module proxy DMR", par référence à ses fonctions de module de restitution DMR.

Le serveur de transcodage 16 est apte à adapter le format de codage des contenus multimédia stockés dans le serveur de contenus 8 pour qu'ils soient adaptés à une restitution par l'équipement de restitution 10A, 10B.

Le serveur de transmission 18 est propre à transmettre les contenus multimédia aux équipements de restitution 10A et 10B sous forme d'un flux continu de données. Il s'agit d'un serveur de "streaming" ou serveur de transmission par flux continu.

Le générateur d'éléments graphiques 20 est apte à générer des éléments graphiques, constituant une interface utilisateur et destinés à être affichés pendant la restitution d'un contenu multimédia, par exemple des informations relatives aux contenus multimédia ou à l'état de l'équipement de restitution (un icone "play", "stop"", "pause"). Ces éléments graphiques sont soit transmis par le générateur 20 directement aux équipements de restitution 10A et 10B, soit transmis au serveur de transcodage 16 pour être mixé à une vidéo à transmettre aux équipements de restitution 10A, 10B.

Le module proxy DMR 14 est apte à convertir les requêtes émises par le module de commande DMC 12 en une ou plusieurs requêtes, destinées à être transmises au serveur de transcodage 16 et/ou au serveur de transmission 18 et/ou au générateur 20 d'éléments graphiques. Le protocole utilisé pour l'envoi de ces requêtes peut être quelconque et adapté à la nature des requêtes ou informations à échanger entre le module proxy DMR 14 et chacune des entités avec lesquelles il coopère. Lorsque le module proxy DMR 14 et ces différentes entités s'exécutent dans un même dispositif physique, une méthode par appel de fonction est également envisageable.

La mémoire 24 comprend, pour chaque équipement de restitution associé au module proxy DMR, un jeu 25 de paramètres définissant les caractéristiques de cet équipement, notamment les caractéristiques des contenus multimédia que cet équipement est susceptible de restituer ainsi que les modes de communication possibles avec cet équipement. Ce jeu 25 de paramètre comprend donc au moins un format de codage audio / vidéo supporté, une indication d'au moins un protocole de communication supporté par l'équipement de restitution considéré, et d'éventuels paramètres de connexion pour établir une liaison de communication avec cet équipement.

Lorsque le module proxy DMR 14 est associé à plusieurs équipements de restitution 10A, 10B, un jeu 25 de paramètre est stocké en association avec un identifiant de l'équipement concerné.

Le serveur de transcodage 16 est apte à transcoder les contenus multimédia, les dé-multiplexer, décoder, puis ré-encoder dans un autre format de codage adapté pour une transmission à l'équipement de restitution 10A ou 10B cible.

Le serveur de transcodage 16 est apte à stocker, dans une mémoire 26, les adresses des contenus multimédia, généralement appelées URL (en français : localisateurs uniformes de ressources, de l'anglais « *Uniform Resource Locator* »).

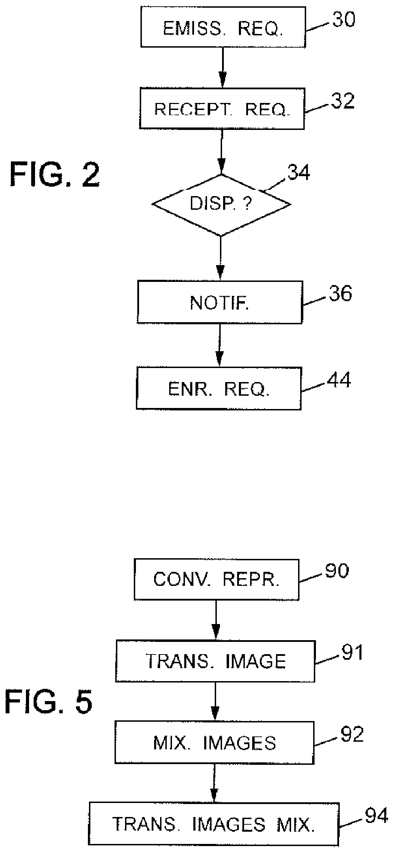

Un mode de réalisation du procédé selon l'invention est décrit par référence à la figure 2. On suppose que le module proxy DMR 14 a été préalablement détecté par le module de commande DMC 12 de l'équipement de commande 4, cette détection s'étant déroulée conformément au mécanisme de découverte de modules de restitution DMR défini dans le standard UPnP.

Le mécanisme de découverte UPnP permet à ce module UPnP, notamment à un module de restitution, d'informer le ou les dispositifs de contrôle du réseau des services proposés par ce module de restitution. Réciproquement, quand un dispositif de commande DMC est connecté au réseau, le mécanisme de découverte permet à ce dispositif de commande DMC de rechercher les modules UPnP présents dans le réseau. Dans les deux situations, un message contenant des informations sur le module UPnP et au moins un des services proposés par le module UPnP considéré est émis par ce module UPnP. Le mécanisme de découverte UPnP utilise le protocole SSDP (Simple Service Discovery Protocol).

En l'occurrence, le module proxy DMR 14 est conçu pour informer le dispositif de commande DMC sur le service de restitution fourni par le ou les équipements de restitution 10A, 10B via le module proxy DMR 14.

Le module proxy DMR 14, mettant en oeuvre les fonctions d'un module de restitution DMR, a ainsi été détecté comme en tant que module de restitution conforme à UPnP. Les caractéristiques du ou des équipements de restitution 10A, 10B associés au module proxy DMR 14 sont donc connues de l'utilisateur de l'équipement de commande 4.

Un mode de réalisation du procédé selon l'invention est maintenant décrit par référence à la figure 2. Dans ce mode de réalisation, on suppose que le module proxy DMR est associé uniquement à l'équipement de restitution 10A. Cet équipement est alors appelé équipement de restitution cible 10A.

Le procédé de restitution selon l'invention débute par une étape 30 d'émission d'une requête UPnP d'initialisation nommée "SetAVTransportURI" en vue d'un accès à un contenu multimédia identifié dans cette requête. Cette requête est transmise du module de commande DMC 12 au module proxy DMR 14. Cette requête fait partie, tout comme la requête UPnP "Play", des requêtes que le module proxy DMR 14 est capable de recevoir et de traiter du fait du service "AVTransport" mis en oeuvre par le module proxy DMR.

Cette requête d'initialisation est adressée à un module de restitution DMR ayant été détecté conformément au mécanisme de découverte prévu dans le standard UPnP : en l'occurrence, elle est adressée au module proxy DMR associé à l'équipement de restitution 10A, sur lequel l'utilisateur souhaite restituer le contenu multimédia. La requête d'initialisation comporte une adresse du contenu multimédia, généralement appelée URI (de l'anglais « *Uniform Resource Identifier* »), cette adresse URI est par exemple sous la forme suivante:
http://192.168.1.10:9000/dlna/objectID=1234
et comprend l'adresse ("192.168.1.10") du serveur de contenus dans lequel est stocké le contenu multimédia.

La requête d'initialisation comporte également des métadonnées concernant notamment des informations relatives à la restitution telles que le titre du film à jouer, la durée du film, etc.

Au cours d'une étape 32, le module proxy DMR 14 réceptionne ladite requête. Le module proxy DMR 14 identifie le serveur de contenus stockant le contenu 8 multimédia à partir de l'adresse URI contenue dans cette requête.

Au cours d'une étape 34, le module proxy DMR 14 transmet au serveur de contenus 8 identifié à l'étape 32, une requête de vérification de la disponibilité du contenu multimédia comprenant un identifiant du contenu multimédia. Cette requête est également utilisée pour obtenir une information sur le format de codage du contenu multimédia et pour déterminer si ce format de codage est accepté par l'équipement de restitution 10A, 10B ou si un transcodage est nécessaire.

Sur réception de cette requête, le serveur de contenus 8 vérifie la disponibilité du contenu multimédia et transmet une réponse au module proxy DMR 14. La requête de vérification de la disponibilité du contenu multimédia et la réponse à cette requête sont envoyées en utilisant par exemple le protocole HTTP. Lorsque le contenu multimédia est disponible, la réponse comprend une information sur le format de codage du contenu multimédia.

A l'étape 36, le module proxy DMR 14 traite la réponse à la requête. Si le contenu multimédia n'est pas disponible, le module proxy DMR 14 transmet, au cours de l'étape 36, une notification au module de commande DMC 12 selon laquelle le contenu multimédia n'est pas disponible.

Si le contenu multimédia est disponible, le module proxy DMR 14 vérifie préalablement que le serveur de transcodage 16 comprend les codeurs / décodeurs nécessaires pour transcoder le contenu multimédia, notamment pour encoder le contenu multimédia dans un format de codage adapté pour une restitution par l'équipement de restitution cible 10A, et, dans l'affirmative, transmet au module de commande DMC 12 une notification d'accord pour la restitution.

Au cours d'une étape 44, le module proxy DMR 14 enregistre la requête d'initialisation dans la mémoire 24, notamment les métadonnées du contenu à restituer.

Les étapes 50 et suivantes sont déclenchées par le module proxy DMR 14, qui est chargé de piloter la restitution, par l'équipement de restitution cible 10A, du contenu multimédia. Le serveur de transcodage 16, le serveur de transmission 18 et le générateur 20 d'éléments graphiques coopèrent, sous le contrôle du module proxy DMR 14, pour la mise en oeuvre de cette restitution.

Le mode de coopération entre ces entités est adapté à la nature de l'équipement de restitution cible 10A: il est adapté notamment aux formats de codage audio / vidéo que cet équipement supporte, à l'interface de commande qu'il présente et au format de commandes attendu par cette interface, ainsi qu'à la séquence des commandes et des données audio/vidéo attendues par cet équipement. Ainsi la séquence et la nature des étapes 50 et suivantes peuvent varier d'un équipement à l'autre.

La succession des opérations à déclencher pour la restitution d'un contenu multimédia dépend également du format de codage du contenu multimédia stocké dans le serveur de contenus 8: une phase préalable de transcodage de ce contenu est exécutée si nécessaire par le serveur de transcodage 16 afin de disposer d'un contenu multimédia encodé sous une forme adaptée pour une restitution par l'équipement de restitution cible 10A. Si le contenu multimédia obtenu auprès du serveur de contenus 8 est déjà encodé sous une forme adaptée pour une restitution par l'équipement de restitution cible 10A, cette phase ne sera pas exécutée.

De manière générale, la mise en oeuvre de la restitution comprend:
- une phase d'initialisation;
- une phase d'obtention du contenu multimédia auprès du serveur de contenus 8;
- une phase, optionnelle, de transcodage de ce contenu multimédia,
- une phase de restitution de ce contenu, comprenant optionnellement un affichage d'une interface utilisateur relative à cette restitution.

Les étapes 50 à 58 suivantes correspondant à la phase d'initialisation de la restitution.

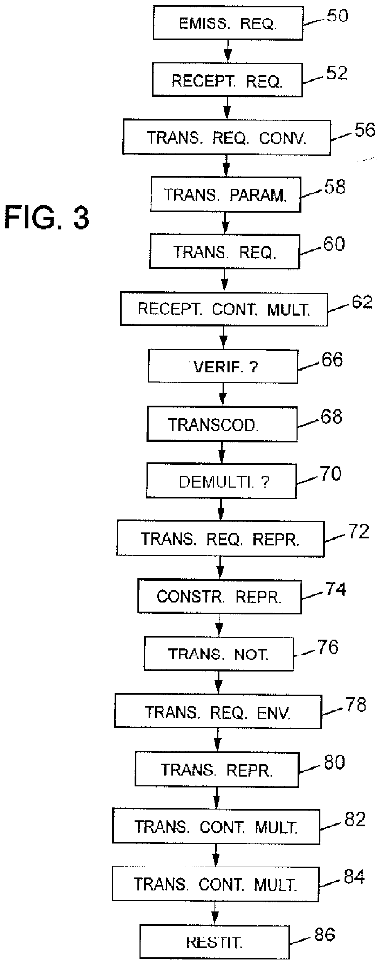

En référence à la figure 3, au cours d'une étape 50, le module de commande DMC 12 émet une requête de restitution d'un contenu multimédia conforme au protocole UPnP. Cette requête de restitution est généralement appelée action « *Play* » dans le protocole UPnP. Cette requête fait partie, tout comme la requête UPnP "SetAVTransport", des requêtes que le module proxy DMR 14 est capable de recevoir et de traiter du fait du service "AVTransport" mis en oeuvre par le module proxy DMR.

Au cours d'une étape 52, le module proxy DMR 14 réceptionne la requête émise au cours de l'étape 50.

Au cours d'une étape 56, le module proxy DMR 14 envoie au serveur de transcodage 16 une requête d'initialisation contenant l'adresse URI du contenu multimédia à restituer et le jeu 25 de paramètres de l'équipement de restitution cible 10A tel que mémorisé dans la mémoire 24.

Au cours d'une étape 58, le serveur de transcodage 16 recherche les paramètres de connexion de l'équipement de restitution 10A identifié dans la requête d'initialisation et les transmet dans une autre requête d'initialisation envoyée au serveur de transmission 18. En alternative, cette requête d'initialisation du serveur de transmission est émise par le module proxy DMR 14 sans passer par l'intermédiaire du serveur de transcodage 16.

Les étapes 60 à 70 suivantes correspondent aux phases d'obtention et de transcodage du contenu multimédia.

Au cours d'une étape 60, le serveur de transcodage 16 transmet au serveur de contenus 8 une requête d'obtention du contenu conformément au protocole HTTP.

Sur réception de cette requête, le serveur de contenus 8 recherche le contenu multimédia à partir de l'adresse URI de celui-ci. Puis, le serveur de contenus 8 transmet des paquets de données encapsulés selon le protocole HTTP. Ces paquets de données contiennent les données du contenu multimédia choisi.

Au cours d'une étape 62, le serveur de transcodage 16 réceptionne les paquets de données provenant du serveur de contenus 8.

Au cours d'une étape 66, le serveur de transcodage 16 vérifie si les paquets de données provenant du serveur de contenus 8 sont adaptés pour pouvoir être transmis et joués par l'équipement de restitution 10A.

En particulier, le serveur de transcodage 16 vérifie s'il doit dé-multiplexer les paquets de données, et, dans l'affirmative, dé-multiplexe les paquets de données.

Au cours d'une étape 68, le serveur de transcodage 16 vérifie si les paquets de données sont codés selon un format de codage accepté par l'équipement de restitution 10A à partir de la liste 31 de formats de codage. Puis, si l'équipement de restitution 10A n'accepte pas le format de codage du contenu multimédia, il le transcode, par exemple, d'un codage MPG4 en un codage MPG2.

Au cours d'une étape 70, le serveur de transcodage 16 vérifie si les paquets de données doivent être multiplexés, et il multiplexe les paquets de données, si nécessaire.

Les étapes 72 à 80 suivantes correspondent à la génération et l'affichage d'une interface utilisateur.

Au cours d'une étape 72, le module proxy DMR 14 transmet une requête de construction d'une représentation graphique au générateur d'éléments graphiques 20. La requête de construction comprend les métadonnées contenant des informations relatives à la restitution: par exemple relatives à l'état de l'équipement de restitution 10A et/ou au contenu multimédia et/ou l'état d'avancement de la restitution (temps restant par exemple). Ces métadonnées ont été enregistrées dans la mémoire 24 au cours de l'étape 44. En réponse, le générateur d'éléments graphiques 20 transmet au module proxy DMR 14, une notification de bonne réception de ladite requête.

Au cours d'une étape 74, le générateur d'éléments graphiques 20 construit une représentation graphique à partir des informations relatives à la restitution contenues dans la requête de construction.

Au cours d'une étape 76, le module proxy DMR 14 transmet à l'équipement de restitution cible 10A une notification de mise à disposition d'une représentation graphique à l'équipement de restitution 10A, 10B. Cette requête est codée selon le protocole SNMP (de l'anglais « *Simple Network Management Protocol* »). En alternative, c'est le générateur d'éléments graphiques 20 qui notifie l'équipement de restitution cible 10A.

Sur réception de cette notification, l'équipement de restitution 10A transmet au générateur d'éléments graphiques 20 une requête d'envoi de la représentation graphique construite par celui-ci, au cours d'une étape 78.

Au cours d'une étape 80, le générateur d'éléments graphiques 20 envoie la représentation graphique construite à l'équipement de restitution 10A.

Les étapes 82 à 86 suivantes correspondent au déclenchement et à l'arrêt de la restitution du contenu multimédia.

Au cours d'une étape 82, le serveur de transcodage 16 transmet le contenu multimédia éventuellement traité au cours des étapes 68 et 70, au serveur de transmission 18.

En particulier, lorsque l'équipement de restitution 10A accepte le format de codage, le serveur de transcodage 16 transmet le contenu multimédia tel qu'initialement encodé au serveur de transmission 18

Au cours d'une étape 84, le serveur de transmission 18 déclenche alors la restitution du contenu multimédia. D'une part le serveur de transmission 18 transmet le contenu multimédia à l'équipement de restitution 10A identifié dans la requête d'initialisation reçue lors de l'étape 52, de préférence par émission à destination de l'équipement de restitution cible d'un flux continu de données (mode d'émission en streaming).

D'autre part, le serveur de transmission 18 émet - simultanément ou préalablement - une commande de déclenchement de la restitution à destination de l'équipement de restitution 10A, sous forme de signal de commande ou de requête conforme à un protocole de commande supporté par l'équipement de restitution 10A. Cette commande peut optionnellement être intégrée dans le flux de données audio / vidéo émis par le serveur de transmission 18 à destination de l'équipement de restitution 10A. Le déclenchement de la restitution peut aussi résulter du déclenchement de l'émission du flux de données réalisée par le serveur de transmission 18.

Au cours d'une étape 86, l'équipement de restitution 10A restitue le contenu multimédia, ainsi que la représentation graphique construite.

Lorsque le module proxy DMR 14 est associé à plusieurs modules de restitution prédéfinis 10A, 10B, le serveur de transmission 18 transmet le contenu multimédia à l'ensemble desdits modules de restitution prédéfinis 10A, 10B.

Lorsque le module de commande DMC 12 émet une requête d'arrêt de la restitution du contenu multimédia, cette requête est convertie par le module proxy DMR 14 en une requête conforme à un protocole accepté par le serveur de transcodage 16. Le serveur de transmission 18 interrompt l'émission du flux de données et émet à destination de l'équipement de restitution 10A, sous forme de signal de commande ou de requête conforme à un protocole de commande supporté par l'équipement de restitution 10A, une commande d'arrêt de la restitution. L'arrêt de la restitution peut aussi résulter de l'arrêt de l'émission du flux de données réalisée par le serveur de transmission 18.

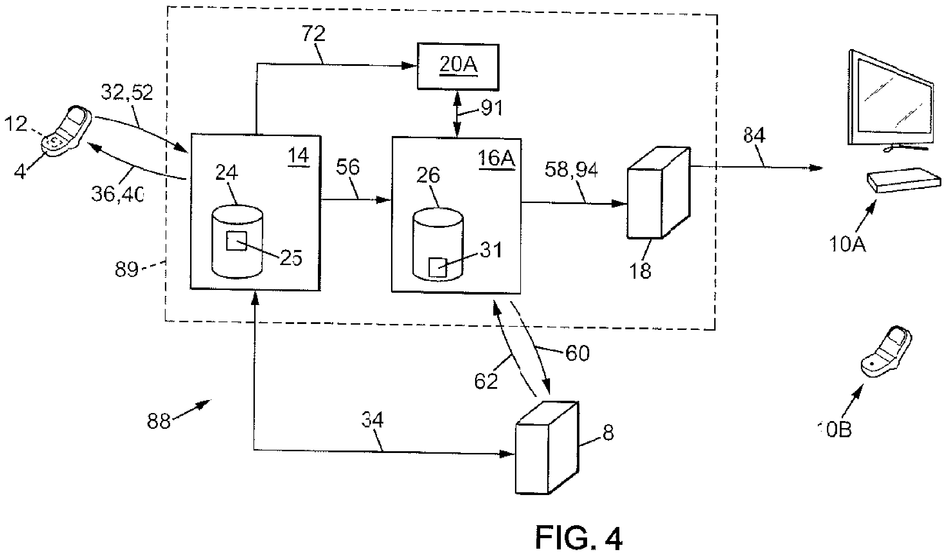

En référence à la figure 4, le système de restitution 88 selon le second mode de réalisation de l'invention est similaire au système de restitution 2 selon le premier mode de réalisation de l'invention. Les éléments du système de restitution selon le second mode de réalisation identiques aux éléments du système de restitution 2 selon le premier mode de réalisation de l'invention comportent les mêmes références et ne seront pas décrits une seconde fois.

Le dispositif de transmission 89 selon le second mode de réalisation de l'invention comporte un générateur d'éléments graphiques 20A et un serveur de transcodage 16A.

Le générateur d'éléments graphiques 20A est similaire au générateur d'éléments graphiques 20 selon le premier mode de réalisation. Ce générateur d'éléments graphiques 20A est en outre apte à réaliser une conversion de la représentation graphique en une image et à transmettre cette image convertie au serveur de transcodage 16A.

Le serveur de transcodage 16A selon le second mode de réalisation est similaire au serveur de transcodage 16 selon le premier mode de réalisation. Le serveur de transcodage 16A est en outre capable de mixer ladite image convertie aux images du contenu multimédia et de transmettre les images mixées au serveur de transmission 18, afin que celui-ci les transmette à l'équipement de restitution 10A.

En référence à la figure 5, le procédé de restitution selon le second mode de réalisation comporte les mêmes étapes que le procédé de restitution selon le premier mode de réalisation, à l'exception du remplacement des étapes 76 à 82 par les étapes 90 à 94.

Au cours d'une étape 90, la représentation graphique construite au cours de l'étape 74 est convertie en une image, par exemple de type bitmap.

Au cours d'une étape 91, l'image est transmise au serveur de transcodage 16A. Sur réception de cette image, le serveur de transcodage 16A transmet un accusé réception au générateur d'éléments graphiques 20A.

Au cours d'une étape 92, le serveur de transcodage 16A mixe ladite image aux images du contenu multimédia.

Au cours d'une étape 94, le serveur de transcodage 16A transmet les images mixées au serveur de transmission 18 afin que celui-ci les transmette à l'équipement de restitution cible 10A.

Avantageusement, le système selon le second mode de réalisation de l'invention permet d'utiliser un générateur d'éléments graphiques indépendant de l'intergiciel (de l'anglais « *middleware* ») de l'équipement de restitution. Il peut donc s'appliquer indépendamment à l'ensemble des équipements de restitution existant sur le marché qui peuvent restituer des images ou vidéos.

Avantageusement, le système de restitution selon le premier mode de réalisation de l'invention nécessite peu de ressources en calcul mais nécessite une adaptation spécifique au modèle de l'équipement de restitution.

Avantageusement, le procédé selon l'invention permet à des modules de commande UPnP DMC de transmettre des contenus multimédia vers un ou plusieurs équipements de restitution ne supportant pas le protocole UPnP. Grâce au module proxy DMR, ces derniers seront vus, par le module de commande DMC, comme des modules de restitution DMR supportant le protocole UPnP.

Avantageusement, le système selon l'invention permet d'afficher des informations relatives au contenu multimédia.

Avantageusement, le système selon l'invention permet d'adresser simultanément et indépendamment un ensemble de plusieurs équipements de restitution et de diffuser un même contenu multimédia sur cet ensemble d'équipements de restitution. Grâce au module proxy DMR associé à cet ensemble d'équipements et présentant une interface de commande unique pour cet ensemble d'équipements, cet ensemble est vu comme un unique équipement de restitution supportant le protocole UPnP dans le réseau UPnP.

Bien entendu, conformément au standard UPnP, plusieurs modules de restitution DMR peuvent coexister dans un même réseau: ceci signifie que plusieurs instances du module proxy DMR 14 peuvent être mises en oeuvre dans un même réseau, chaque instance étant associée à un ou plusieurs équipements de restitution qu'elle représente.

Le procédé de restitution selon l'invention peut ne pas comporter d'étape de restitution. Il s'agit alors d'un procédé de transmission en vue de la restitution d'un contenu multimédia.

## Revendications

1. Procédé de restitution, par au moins un équipement de restitution (10A, 10B), d'un contenu multimédia stocké par un serveur (8) de contenus multimédia, ladite restitution étant déclenchée au moyen d'une requête de restitution, émise par un module de commande d'équipements de restitution, ladite requête de restitution étant codée selon un protocole de commande non supporté par ledit au moins un équipement de restitution (10A, 10B), ladite requête de restitution étant transférée à un module (14) supportant ledit protocole de commande, le procédé comprenant les étapes suivantes :
- réceptionner (52) ladite requête de restitution par ledit module (14), et
- sur réception de ladite requête de restitution, piloter à partir dudit module (14) la transmission (82, 84 ; 94) dudit contenu multimédia du serveur de contenus multimédia (8) vers ledit au moins un équipement de restitution (10A, 10B), ledit contenu multimédia étant encodé sous une forme adaptée pour une restitution dudit contenu multimédia par ledit au moins un équipement de restitution (10a, 10B).

2. Procédé de restitution selon la revendication 1, qui comporte en outre les étapes suivantes :
- vérifier (36) que le contenu multimédia stocké dans le serveur de contenus (8) est dans un format de codage accepté par l'un parmi l'équipement de restitution (10A, 10B); et, dans la négative,
- vérifier (36) si un serveur de transcodage est apte à convertir le contenu multimédia stocké dans le serveur de contenus (8) dans un format de codage accepté par l'équipement de restitution (10A, 10B).

3. Procédé de restitution selon la revendication 1, le procédé comportant en outre les étapes suivantes :
- obtenir (58) des paramètres de connexion de l'équipement de restitution (10A, 10B) ; et
- transmettre (58) lesdits paramètres de connexion à un serveur de transmission (18), l'étape de transmission (82, 84; 94) du contenu multimédia étant réalisée par l'intermédiaire du serveur de transmission (18).

4. Procédé de restitution selon la revendication 1, qui comporte en outre une phase d'obtention du contenu multimédia auprès du serveur de contenus (8), ladite phase d'obtention comprenant les étapes suivantes :
- vérifier (68) si le format de codage du contenu multimédia obtenu appartient à une liste de formats de codage (31) acceptés par l'équipement de restitution (10A, 10B) ; et
- transcoder (68) le contenu multimédia obtenu en un contenu multimédia encodé sous une forme adaptée pour une restitution dudit contenu multimédia par ledit au moins un équipement de restitution (10A, 10B), lorsque ledit format de codage du contenu multimédia réceptionné n'est pas dans ladite liste de formats de codage (31).

5. Procédé de restitution selon la revendication 1, le procédé comportant, de plus, les étapes suivantes :
- transmettre (72) une requête de construction d'une représentation graphique à un générateur d'éléments graphiques (20 ; 20A) ;
- construire (74) ladite représentation graphique, par le générateur d'éléments graphiques (20 ; 20A) ;
- transmettre (80) ladite représentation graphique à l'équipement de restitution (10A, 10B).

6. Procédé de restitution selon la revendication 5, qui comporte en outre les étapes suivantes :
- transmettre (76) une notification de mise à disposition d'une représentation graphique à l'équipement de restitution (10A, 10B) ; et
- sur réception d'une requête émise par l'équipement de restitution (10A, 10B), transmettre (80) ladite représentation graphique à l'équipement de restitution (10A, 10B).

7. Procédé de restitution selon la revendication 5, qui comporte en outre les étapes suivantes :
- convertir (90) ladite représentation graphique construite en au moins une image ;
- mixer (92) ladite au moins image aux images du contenu multimédia ;
et, dans lequel le contenu multimédia transmis à l'équipement de restitution (10A, 10B) comprend les images mixées.

8. Procédé de restitution selon la revendication 1, dans lequel le protocole supporté par le module (14) est un protocole UPnP, ledit module (14) mettant en oeuvre des fonctions d'un module de restitution UPnP.

9. Procédé de restitution selon la revendication 1, dans lequel ledit module (14) est apte à informer ledit dispositif de commande sur un service de restitution susceptible d'être fourni par ledit au moins un équipement de restitution (10A, 10B) via ledit module (14).

10. Module (14) associé à au moins un équipement de restitution (10A, 10B), comprenant :
- des moyens pour réceptionner une requête de restitution, émise par un module (12) de commande d'équipements de restitution, destinée à déclencher la restitution d'un contenu multimédia stocké par un serveur (8) de contenu multimédia, ladite requête étant codée selon un protocole de commande supporté par ledit module de commande mais non supporté par ledit au moins un équipement de restitution (10A, 10B), ladite requête de restitution étant transférée à un module (14) supportant ledit protocole de commande ;
- des moyens pour, sur réception de ladite requête de restitution, piloter l'envoi du contenu multimédia du serveur de contenus multimédia (8) vers ledit au moins un équipement de restitution (10A, 10B) sous une forme adaptée pour une restitution dudit contenu multimédia par ledit au moins un équipement de restitution.

11. Module (14) selon la revendication 10, comprenant des moyens pour informer ledit dispositif de commande sur un service de restitution susceptible d'être fourni par ledit au moins un équipement de restitution (10A, 10B) via ledit module (14).

12. Programme d'ordinateur stocké sur un support d'informations, ledit programme comprenant des instructions permettant la mise en oeuvre du procédé de restitution selon l'une quelconque des revendications 1 à 9, lorsque ce programme est exécuté par un système informatique.

## Patentansprüche

1. Verfahren zur Wiedergabe, durch mindestens eine Wiedergabeausrüstung (10A, 10B), eines von einem Server (8) von Multimedia-Inhalten gespeicherten Multimedia-Inhalts, wobei die Wiedergabe mittels einer Wiedergabeanforderung ausgelöst wird, die von einem Steuermodul von Wiedergabeausrüstungen gesendet wird, wobei die Wiedergabeanforderung gemäß einem nicht von der mindestens einen Wiedergabeausrüstung (10A, 10B) unterstützten Steuerprotokoll codiert ist, wobei die Wiedergabeanforderung an ein das Steuerprotokoll unterstützendes Modul (14) weitergeleitet wird, wobei das Verfahren die folgenden Schritte enthält:
- Annahme (52) der Wiedergabeanforderung durch das Modul (14), und
- nach Annahme der Wiedergabeanforderung, Steuern ausgehend vom Modul (14) der Übertragung (82, 84; 94) des Multimedia-Inhalts vom Server von Multimedia-Inhalten (8) zur mindestens einen Wiedergabeausrüstung (10A, 10B), wobei der Multimedia-Inhalt in einer Form codiert ist, die für eine Wiedergabe des Multimedia-Inhalts durch die mindestens eine Wiedergabeausrüstung (10A, 10B) geeignet ist.

2. Wiedergabeverfahren nach Anspruch 1, das außerdem die folgenden Schritte aufweist:
- Überprüfen (36), dass der im Inhaltsserver (8) gespeicherte Multimedia-Inhalt in einem Codierformat ist, das von einer der Wiedergabeausrüstungen (10A, 10B) akzeptiert wird; und wenn nicht,
- Überprüfen (36), ob ein Transcodierserver in der Lage ist, den im Inhaltsserver (8) gespeicherten Multimedia-Inhalt in ein Codierformat umzuwandeln, das von der Wiedergabeausrüstung (10A, 10B) akzeptiert wird.

3. Wiedergabeverfahren nach Anspruch 1, wobei das Verfahren außerdem die folgenden Schritte aufweist:
- Erhalten (58) der Verbindungsparameter der Wiedergabeausrüstung (10A, 10B); und
- Übertragen (58) der Verbindungsparameter an einen Übertragungsserver (18), wobei der Schritt der Übertragung (82, 84; 94) des Multimedia-Inhalts mittels des Übertragungsservers (18) durchgeführt wird.

4. Wiedergabeverfahren nach Anspruch 1, das außerdem eine Phase des Erhalts des Multimedia-Inhalts beim Inhaltsserver (8) aufweist, wobei die Erhaltungsphase die folgenden Schritte enthält:
- Überprüfen (68), ob das Codierformat des erhaltenen Multimedia-Inhalts zu einer Liste von Codierformaten (31) gehört, die von der Wiedergabeausrüstung (10A, 10B) akzeptiert werden; und
- Transcodieren (68) des erhaltenen Multimedia-Inhalts in einen Multimedia-Inhalt, der in einer für eine Wiedergabe des Multimedia-Inhalts durch die mindestens eine Wiedergabeausrüstung (10A, 10B) geeigneten Form codiert ist, wenn das Codierformat des angenommenen Multimedia-Inhalts sich nicht in der Liste von Codierformaten (31) befindet.

5. Wiedergabeverfahren nach Anspruch 1, wobei das Verfahren zudem die folgenden Schritte aufweist:
- Übertragen (72) einer Aufbauanforderung einer grafischen Darstellung an einen Generator grafischer Elemente (20; 20A);
- Aufbau (74) der grafischen Darstellung durch den Generator grafischer Elemente (20; 20A);
- Übertragen (80) der grafischen Darstellung an die Wiedergabeausrüstung (10A, 10B).

6. Wiedergabeverfahren nach Anspruch 5, das außerdem die folgenden Schritte aufweist:
- Übertragen (76) einer Benachrichtigung der Zurverfügungstellung einer grafischen Darstellung an die Wiedergabeausrüstung (10A, 10B); und
- nach Annahme einer von der Wiedergabeausrüstung (10A, 10B) gesendeten Anforderung, Übertragen (80) der grafischen Darstellung an die Wiedergabeausrüstung (10A, 10B).

7. Wiedergabeverfahren nach Anspruch 5, das außerdem die folgenden Schritte aufweist:
- Umwandeln (90) der aufgebauten grafischen Darstellung in mindestens ein Bild;
- Mischen (92) des mindestens einen Bilds mit den Bildern des Multimedia-Inhalts;
und wobei der an die Wiedergabeausrüstung (10A, 10B) übertragene Multimedia-Inhalt die gemischten Bilder enthält.

8. Wiedergabeverfahren nach Anspruch 1, wobei das vom Modul (14) unterstützte Protokoll ein Protokoll UPnP ist, wobei das Modul (14) Funktionen eines Wiedergabemoduls UPnP anwendet.

9. Wiedergabeverfahren nach Anspruch 1, wobei das Modul (14) die Steuervorrichtung über einen Wiedergabedienst informieren kann, der von der mindestens einen Wiedergabeausrüstung (10A, 10B) über das Modul (14) geliefert werden kann.

10. Modul (14), das mindestens einer Wiedergabeausrüstung (10A, 10B) zugeordnet ist, das enthält:
- Einrichtungen zur Annahme einer Wiedergabeanforderung, gesendet von einem Modul (12) zur Steuerung von Wiedergabeausrüstungen, dazu bestimmt, die Wiedergabe eines Multimedia-Inhalts auszulösen, der von einem Server (8) von Multimedia-Inhalten gespeichert wird, wobei die Anforderung gemäß einem Steuerprotokoll codiert ist, das vom Steuermodul, aber nicht von der mindestens einen Wiedergabeausrüstung (10A, 10B) unterstützt wird, wobei die Wiedergabeanforderung an ein Modul (14) weitergeleitet wird, das das Steuerprotokoll unterstützt;
- Einrichtungen, um nach Annahme der Wiedergabeanforderung das Senden des Multimedia-Inhalts vom Server von Multimedia-Inhalten (8) zur mindestens einen Wiedergabeausrüstung (10A, 10B) in einer Form zu steuern, die für eine Wiedergabe des Multimedia-Inhalts durch die mindestens eine Wiedergabeausrüstung geeignet ist.

11. Modul (14) nach Anspruch 10, das Einrichtungen enthält, um die Steuervorrichtung über einen Wiedergabedienst zu informieren, der von der mindestens einen Wiedergabeausrüstung (10A, 10B) über das Modul (14) geliefert werden kann.

12. Computerprogram, das auf einem Informationsträger gespeichert ist, wobei das Programm Anweisungen enthält, die die Durchführung des Wiedergabeverfahrens nach einem der Ansprüche 1 bis 9 erlauben, wenn dieses Programm von einem EDV-System ausgeführt wird.

## Claims

1. Method for rendering, by at least one rendering device (10A, 10B), a multimedia content stored by a multimedia content server (8), said rendering being triggered by means of a rendering request, transmitted by a rendering device control module, said rendering request being encoded according to a control protocol that is not supported by said at least one rendering device (10A, 10B), said rendering request being transferred to a module (14) supporting said control protocol, the method comprising the following steps:
- receiving (52) said rendering request by said module (14); and
- on reception of said rendering request, controlling, from said module (14), the transmission (82, 84; 94) of said multimedia content from the multimedia content server (8) to said at least one rendering device (10A, 10B), said multimedia content being encoded in a form suitable for rendering of said multimedia content by said at least one rendering device (10A, 10B).

2. Rendering method according to Claim 1, which additionally includes the following steps:
- verifying (36) that the multimedia content stored in the content server (8) is in a coding format that is accepted by one of the rendering devices (10A, 10B); and, if not,
- verifying (36) whether a transcoding server is capable of converting the multimedia content stored in the content server (8) into a coding format that is accepted by the rendering device (10A, 10B).

3. Rendering method according to Claim 1, the method additionally including the following steps:
- obtaining (58) connection parameters of the rendering device (10A, 10B); and
- transmitting (58) said connection parameters to a transmission server (18), the step of transmitting (82, 84; 94) the multimedia content being carried out via the transmission server (18).

4. Rendering method according to Claim 1, which also includes a phase of obtaining the multimedia content from the content server (8), said obtainment phase comprising the following steps:
- verifying (68) whether the coding format of the obtained multimedia content belongs to a list of coding formats (31) that are accepted by the rendering device (10A, 10B); and
- transcoding (68) the obtained multimedia content into an multimedia content that is encoded in a form suitable for rendering of said multimedia content by said at least one rendering device (10A, 10B), when said coding format of the received multimedia content is not in said list of coding formats (31).

5. Rendering method according to Claim 1, the method additionally including the following steps:
- transmitting (72) a graphical representation construction request to a graphical element generator (20; 20A);
- constructing (74) said graphical representation, by the graphical element generator (20; 20A);
- transmitting (80) said graphical representation to the rendering device (10A, 10B).

6. Rendering method according to Claim 5, which additionally includes the following steps:
- transmitting (76) a notification of the availability of a graphical representation to the rendering device (10A, 10B); and
- on reception of a request transmitted by the rendering device (10A, 10B), transmitting (80) said graphical representation to the rendering device (10A, 10B).

7. Rendering method according to Claim 5, which additionally comprises the following steps:
- converting (90) said constructed graphical representation into at least one image;
- mixing (92) said at least one image with the images of the multimedia content;
and, in which the multimedia content transmitted to the rendering device (10A, 10B) comprises the mixed images.

8. Rendering method according to Claim 1, in which the protocol supported by the module (14) is a UPnP protocol, said module (14) implementing functions of a UPnP rendering module.

9. Rendering method according to Claim 1, in which said module (14) is capable of informing said control device of a rendering service that is likely to be provided by said at least one rendering device (10A, 10B) via said module (14).

10. Module (14) associated with at least one rendering device (10A, 10B), comprising:
- means for receiving a rendering request, transmitted by a rendering device control module (12), which request is intended to trigger the rendering of an multimedia content stored by a multimedia content server (8), said request being encoded according to a control protocol supported by said control module but not supported by said at least one rendering device (10A, 10B), said rendering request being transferred to a module (14) supporting said control protocol;
- means for, on reception of said rendering request, controlling the transmission of the multimedia content from the multimedia content server (8) to said at least one rendering device (10A, 10B) in a form suitable for rendering of said multimedia content by said at least one rendering device.

11. Module (14) according to Claim 10, comprising means for informing said control device of a rendering service that is likely to be provided by said at least one rendering device (10A, 10B) via said module (14).

12. Computer program stored on a information medium, said program comprising instructions allowing the implementation of the rendering method according to any one of Claims 1 to 9, when this program is executed by a computer system.
